# FASCICULE DE BREVET EUROPEEN

(11) **EP 3 533 644 B1**
(45) Date de publication et mention de la délivrance du brevet: **25.11.2020**
(21) Numéro de dépôt: 19150543.7
(22) Date de dépôt: 07.01.2019
(51) Int. Cl.: B60K 1/00, B62D 21/02, B62D 21/11, B62D 29/00, B62D 29/04

(54) **GROUPE MOTOPROPULSEUR DE VÉHICULE À MACHINE ÉLECTRIQUE MOTRICE SUSPENDUE À UNE TRAVERSE HYBRIDE À PIÈCES DE FILTRAGE**
MOTORANTRIEBSANLAGE EINES FAHRZEUGS MIT EINER ELEKTRISCHEN ANTRIEBSMASCHINE, DIE AN EINEM HYBRIDTRÄGER MIT FILTERTEILEN AUFGEHÄNGT IST
VEHICLE POWER TRAIN WITH A DRIVING ELECTRIC MACHINE SUSPENDED FROM A HYBRID CROSSMEMBER WITH FILTERING PARTS

(30) Priorité: 28.02.2018 FR 1851754
(43) Date de publication de la demande: 04.09.2019
(73) Titulaire: PSA Automobiles SA, 78300 Poissy (FR)
(72) Inventeur: CHALVET, MANUEL, 75015 PARIS 15 (FR); KREIS, ADRIEN, 92250 LA GARENNE COLOMBES (FR); LAMBERT, SAMUEL, 25200 MONTBELIARD (FR)

(56) Documents cités:
- DE-A1-102010 015 882
- DE-A1-102014 107 510
- DE-A1-102014 216 068
- FR-A1- 3 047 446

## Description

L'invention concerne les groupes motopropulseurs qui équipent certains véhicules et qui comprennent une machine électrique motrice suspendue à une traverse.

Certains groupes motopropulseurs (ou GMPs) de véhicules, généralement de type automobile, comprennent une machine électrique motrice qui est suspendue, via des pièces en élastomère, à une traverse (ou poutre) solidarisée fixement, soit directement, soit indirectement via des pièces intermédiaires, à des éléments structurels, comme par exemple des brancards. On notera qu'une telle traverse sert aussi, parfois, de pièce d'ancrage fixe pour au moins un autre équipement, comme par exemple une partie au moins de l'électronique de puissance.

Les traverses de ce type doivent impérativement offrir une tenue suffisante aux contraintes qui peuvent survenir non seulement en présence de vibrations, accélérations liées à la route et reprises de couple, mais également en cas de choc ou d'événement exceptionnel. Par conséquent, ces traverses sont souvent réalisées en tôle ou en aluminium moulé, ce qui les rend relativement lourdes. Par ailleurs, leur fabrication nécessite l'utilisation d'outils relativement onéreux.

Dans le but de réduire le poids de ces traverses, sans réduire leur tenue aux contraintes, il a été récemment proposé, notamment dans le document brevet FR 3037289, de les réaliser en aluminium extrudé avec des zones longitudinales pleines comportant des trous de fixation pour l'ancrage d'équipements, le couplage aux éléments structurels et le couplage de la machine électrique motrice. Cependant, de telles traverses demeurent encore relativement lourdes et ne peuvent pas présenter une grande diversité de géométries et de formes. En outre, le couplage de la machine électrique motrice à la traverse se fait au moyen de deux paires de pièces de fixation dans lesquelles les deux pièces de fixation doivent être respectivement solidarisées à la machine électrique motrice et à la traverse et couplées entre elles via des pièces en élastomère destinées à filtrer les vibrations, ce qui impose non seulement de nombreuses opérations d'assemblage mais également une diversité importante de pièces à gérer et donc induit une augmentation des coûts et des durées d'assemblage.

DE102014107510 divulgue un groupe motopropulseur de véhicule selon le préambule de la revendication 1.

L'invention a notamment pour but d'améliorer la situation.

Elle propose notamment à cet effet un groupe motopropulseur destiné à équiper un véhicule et comprenant une machine électrique motrice suspendue à une traverse.

Ce groupe motopropulseur se caractérise par le fait que sa traverse comprend :
- une partie principale réalisée dans une matière plastique rigide et comprenant deux extrémités opposées, et
- deux inserts principaux réalisés dans une matière métallique, intégrés respectivement dans les deux extrémités de la partie principale et comprenant chacun des premiers trous participant au couplage de la traverse à des éléments structurels du véhicule et un évidement central dans lequel est installée fixement une pièce de filtrage à laquelle est couplée une partie de la machine électrique motrice et filtrant des vibrations induites par cette dernière.

On dispose ainsi d'un groupe motopropulseur dont la traverse hybride (plastique/métal) non seulement présente un poids réduit par rapport à celui d'une traverse de l'art antérieur et une importante tenue aux contraintes au niveau de ses deux extrémités, là où transitent les principaux efforts, mais également intègre d'origine une partie des pièces de fixation et de filtrage permettant ainsi de réduire la diversité de pièces à gérer, les coûts et la durée d'assemblage.

Le groupe motopropulseur selon l'invention peut comporter d'autres caractéristiques qui peuvent être prises séparément ou en combinaison, et notamment :
- chaque pièce de filtrage peut comprendre une partie amortissante surmoulée dans l'évidement central de son insert principal et comportant un logement central dans lequel est installée fixement une pièce d'ancrage à laquelle est couplée la partie de la machine électrique motrice ;
   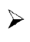 chaque partie amortissante peut être réalisée en élastomère, et chaque pièce d'ancrage peut être réalisée en métal ;
   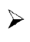 chaque partie amortissante peut être surmoulée sur la pièce d'ancrage associée ;
- les deux extrémités de la partie principale peuvent être surmoulées sur les inserts principaux en présentant des ouvertures en regard des premiers trous ;
- la matière métallique des inserts principaux peut être choisie parmi un aluminium extrudé, un aluminium de fonderie, et un acier (par exemple de tôle) ;
- la matière plastique de la partie principale peut être une matière thermoplastique chargée en fibres de verre ;
   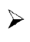 la matière thermoplastique peut être un polyamide ;
- les premiers trous peuvent être taraudés ;
- sa partie principale peut comprendre en au moins un endroit situé entre ses deux extrémités un insert auxiliaire de renfort, qui comprend éventuellement des trous auxiliaires permettant un couplage d'une partie au moins d'un équipement du véhicule ;
   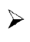 chaque insert auxiliaire peut être réalisé dans un matériau composite à fibres continues ;
   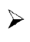 certains au moins des trous auxiliaires peuvent être taraudés.

L'invention propose également un véhicule, éventuellement de type automobile, et comprenant un groupe motopropulseur du type de celui présenté ci-avant.

Par exemple, la traverse du groupe motopropulseur peut être installée suivant une direction qui présente une désorientation par rapport à une direction transversale du véhicule, elle-même perpendiculaire à des côtés latéraux du véhicule.

D'autres caractéristiques et avantages de l'invention apparaîtront à l'examen de la description détaillée ci-après, et des dessins annexés (obtenus pour certains en CAO/DAO, d'où le caractère apparemment discontinu de certaines lignes), sur lesquels :
- la figure 1 illustre schématiquement et fonctionnellement, dans une vue du dessus, un exemple de traverse d'un groupe motopropulseur (ou GMP) selon l'invention, couplée de façon rigide à des éléments structurels et à laquelle est solidarisée de façon non rigide une machine électrique motrice,
- la figure 2 illustre schématiquement et fonctionnellement, dans une vue de côté, la traverse de la figure 1,
- la figure 3 illustre schématiquement, dans une vue en perspective du dessus, un exemple de réalisation d'une traverse d'un GMP selon l'invention,
- la figure 4 illustre schématiquement, dans une vue du dessous (plan horizontal (XY)), la traverse de la figure 3, et
- la figure 5 illustre schématiquement, dans une vue en perspective, un exemple de réalisation d'un insert principal avant son intégration dans une traverse du type de celle illustrée sur les figures 3 et 4.

L'invention a notamment pour but de proposer un groupe motopropulseur (ou GMP) destiné à équiper un véhicule et comprenant une machine électrique motrice ME suspendue à une traverse TS de type hybride (plastique/métal) et à fonction de filtrage de vibrations intégrée.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout véhicule comportant un GMP comprenant une machine électrique motrice suspendue à une traverse, et notamment les véhicules terrestres et les véhicules maritimes ou fluviaux.

Par ailleurs, on considère dans ce qui suit, à titre d'exemple non limitatif, que le GMP est de type tout électrique, et donc comprend une machine électrique motrice mais pas de moteur thermique. Mais l'invention n'est pas limitée à ce type de GMP. Elle concerne en effet également les GMPs hybrides, c'est-à-dire comprenant au moins un moteur thermique et au moins une machine électrique motrice suspendue à une traverse.

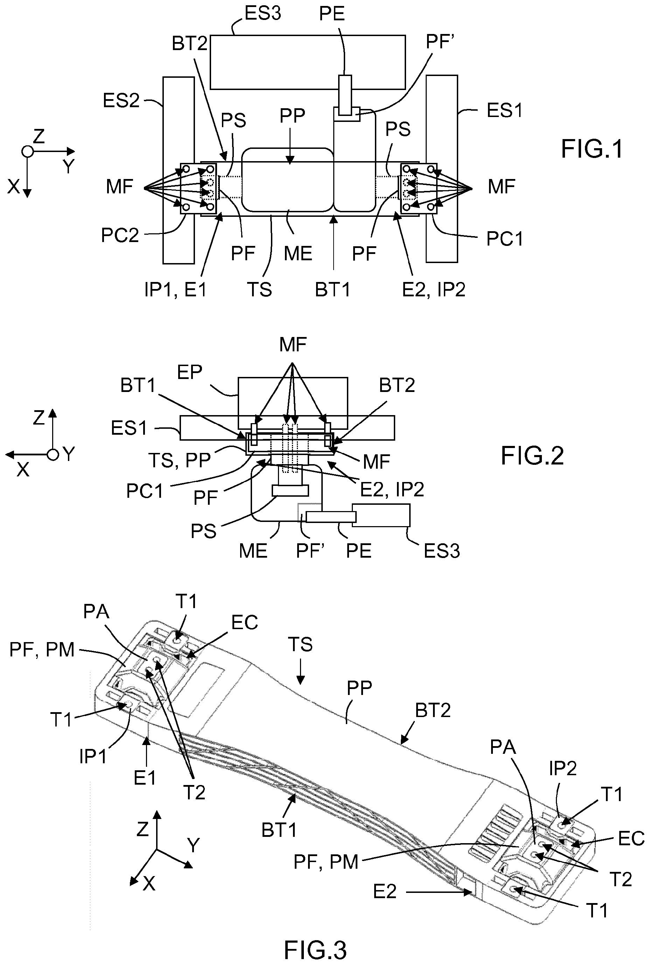

Sur les figures 1 à 5, la direction X est une direction dite longitudinale du véhicule, laquelle est parallèle aux côtés latéraux de ce dernier, la direction Y est une direction dite transversale du véhicule, laquelle est perpendiculaire à la direction X, et la direction Z est une direction dite verticale, laquelle est perpendiculaire aux directions longitudinale X et transversale Y.

Sur les figures 1 et 2 se trouve schématiquement illustrée une partie d'un GMP selon l'invention, équipant un véhicule (très partiellement représenté). En fait, seuls des éléments structurels ES1 à ES3 du véhicule sont ici très schématiquement représentés. Par exemple, les premier ES1 et deuxième ES2 éléments structurels peuvent être ce que l'homme de l'art appelle respectivement des brancards gauche et droit, et le troisième élément structurel ES3 peut être ce que l'homme de l'art appelle un berceau (il est généralement installé sensiblement suivant la direction transversale Y du véhicule).

Ce GMP comprend notamment une traverse (ou poutre) TS et une machine électrique motrice ME suspendue à cette traverse TS qui est par ailleurs couplée aux premier ES1 et deuxième ES2 éléments structurels du véhicule.

La traverse (ou poutre) TS du GMP comprend une partie principale PP, réalisée dans une matière plastique rigide, et deux inserts principaux IPj (j = 1 ou 2), réalisés dans une matière métallique.

Par exemple, la matière métallique dans laquelle sont réalisés les inserts principaux IPj peut être un aluminium extrudé, un aluminium de fonderie, et un acier (par exemple de tôle). L'aluminium extrudé nécessite des investissements réduits, et offre de bonnes caractéristiques mécaniques pour une masse relativement faible. L'acier offre une tenue mécanique au choc élevée. L'aluminium de fonderie permet de réaliser de nombreuses géométries et formes, y compris complexes, et offre une masse relativement faible.

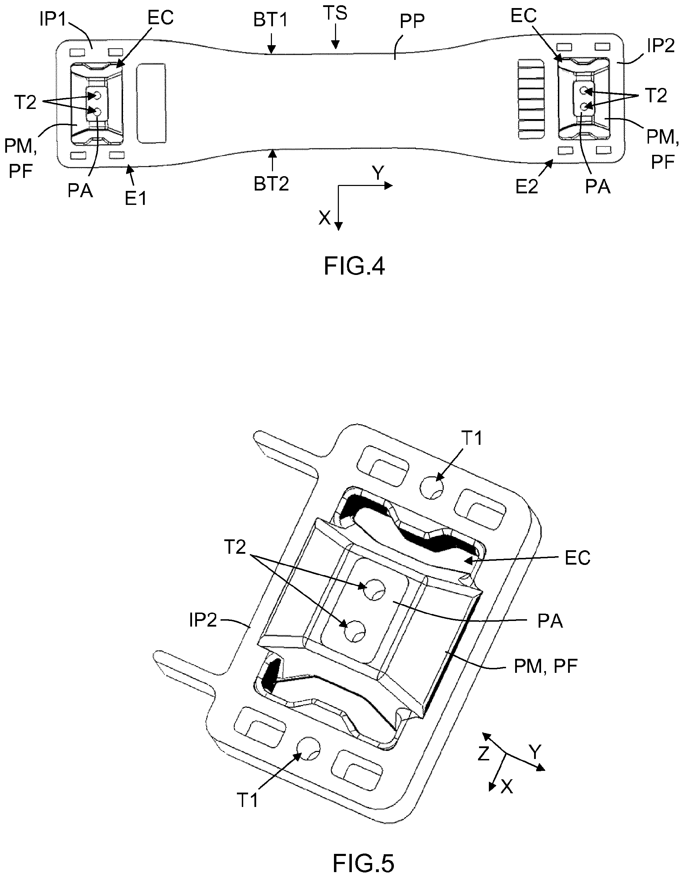

Comme cela apparaît mieux sur les figures 3 et 4, la partie principale PP de la traverse TS comprend deux extrémités Ej opposées et dans lesquelles sont intégrés respectivement les deux inserts principaux IPj.

Comme illustré sur les figures 3 à 5, chaque insert principal IPj comprend des premiers trous T1 qui participent au couplage de la traverse TS aux premier ES1 et deuxième ES2 éléments structurels du véhicule, et un évidement central EC dans lequel est installée fixement une pièce de filtrage PF à laquelle est couplée une partie de la machine électrique motrice ME et filtrant des vibrations induites par cette dernière (ME).

Ainsi, la traverse TS du GMP constitue une pièce hybride (plastique/métal) qui non seulement présente un poids réduit par rapport à celui d'une traverse réalisée en tôle, en aluminium moulé, ou en aluminium extrudé avec des parties pleines, mais également intègre la fonction de filtrage de vibrations. De plus, cette traverse présente une importante tenue aux contraintes au niveau de ses deux extrémités Ej, là où transitent les principaux efforts, à savoir ceux qui sont liés à la chaine de transmission (comme par exemple les reprises de couple et les accélérations liées à l'excitation de la route) et ceux qui sont induits lors d'un accident. La partie principale PP n'a en effet pas besoin de supporter des efforts aussi importants que ceux qui sont supportés par les extrémités Ej, et donc elle peut être réalisée dans une matière plastique de faible poids dès lors qu'elle offre une tenue appropriée (ou raideur suffisante) pour l'endurance vibratoire. En fait, cette partie principale PP est principalement dimensionnée pour supporter d'éventuels équipements autres que la machine électrique motrice ME, comme on le verra plus loin. Ce dimensionnement de la partie principale PP, moins sévère que celui des extrémités Ej avec leurs inserts principaux IPj, peut être assuré par le choix de la matière plastique et/ou de l'architecture (ou dessin) de cette partie principale PP.

L'intégration de l'une des pièces de fixation et de la pièce de filtrage de vibrations dans chaque insert principal IPj de la traverse TS permet de réduire la diversité des pièces à gérer et le nombre de pièces à assembler sur la chaîne de montage, et donc permet de réduire les coûts et la durée d'assemblage.

Sur la figure 5 se trouve schématiquement illustré un exemple d'insert principal IPj (ici IP2) d'une traverse TS (par exemple celle qui est illustrée non limitativement sur les figures 3 et 4). La forme et la géométrie de cet insert principal IP2 ne sont ici données qu'à titre illustratif. Dans cet exemple, comme dans celui des figures 3 et 4, chaque pièce de filtrage PF comprend, à titre d'exemple de réalisation, une partie amortissante PM surmoulée dans l'évidement central EC de son insert principal IPj et comportant un logement central dans lequel est installée fixement une pièce d'ancrage PA à laquelle est couplée une partie de la machine électrique motrice ME. Ce surmoulage est réalisé avant l'étape d'intégration de l'insert principal IPj dans l'une des deux extrémités Ej d'une traverse TS. En variante de ce surmoulage, on pourrait envisager de réaliser un emmanchement en force de chaque partie amortissante PM dans l'évidement central EC de son insert principal IPj.

Afin de permettre le couplage d'une partie de la machine électrique motrice ME à une pièce d'ancrage PA, cette dernière (PA) peut comprendre au moins deux seconds trous T2, de préférence traversants afin de permettre le passage de tiges filetées de vis MF.

Par exemple, chaque partie amortissante PM peut être réalisée en élastomère. Un tel matériau présente en effet une bonne capacité de filtrage des vibrations (ici induites par la machine électrique motrice ME). Il peut être naturel et/ou de synthèse. On notera que l'installation fixe de la pièce d'amortissement PM dans un évidement central EC d'un insert principal IPj permet d'assurer le filtrage dans les trois directions de l'espace.

Egalement par exemple, chaque pièce d'ancrage PA peut être réalisée en métal. Ce métal peut être le même que celui qui est utilisé pour réaliser les inserts principaux IPj. Par conséquent, il pourra s'agir, par exemple, d'un aluminium extrudé, d'un aluminium de fonderie ou d'un acier (par exemple de tôle). Mais cette pièce d'ancrage PA pourrait aussi être réalisée en matière plastique rigide.

Comme illustré non limitativement sur la figure 5, chaque partie amortissante PM peut être surmoulée sur la pièce d'ancrage PA associée. Ce surmoulage peut être avantageusement réalisé en même temps que le surmoulage de la partie amortissante PM dans l'évidement central EC de son insert principal IPj.

Afin d'optimiser l'intégration des inserts principaux IPj dans les deux extrémités Ej de la partie principale PP, ces extrémités Ej peuvent être surmoulées sur les inserts principaux IPj en présentant des ouvertures en regard des premiers trous T1 de ces derniers (IPj). Pour ce faire, les inserts principaux IPj peuvent être initialement placés dans le moule qui est utilisé pour réaliser la partie principale PP, puis la matière plastique est injectée dans ce moule. En variante, on pourrait envisager de réaliser un emmanchement en force des inserts principaux IPj.

A titre d'exemple, la matière plastique dans laquelle est réalisée la partie principale PP peut être une matière thermoplastique chargée en fibres de verre (courtes ou longues). Par exemple, cette matière thermoplastique peut être un polyamide. Cela permet en effet d'obtenir une adhésion de qualité entre les inserts principaux IPj métalliques et les extrémités Ej en matière plastique.

On notera que certains au moins des premiers trous T1 peuvent être traversants afin de permettre le passage d'une vis MF. En variante ou en complément, certains au moins des premiers trous T1 peuvent être taraudés afin de permettre le vissage d'une partie filetée d'une vis MF. Dans ce cas, la hauteur du filetage interne d'un premier trou T1 taraudé est de préférence au moins égale à environ 20 mm lorsque la vis est de type M10.

Dans l'exemple illustré non limitativement sur les figures 1 et 2, la machine électrique motrice ME est suspendue à la face inférieure de la traverse TS au moyen de deux pattes de support PS qui sont solidarisées fixement et respectivement aux pièces d'ancrage PA des pièces de filtrage PF des inserts principaux IPj grâce à des vis MF traversant les seconds trous T2 (ici traversants) et dont les extrémités filetées sont vissées dans des trous taraudés qu'elles (PA) comprennent ou bien dans des écrous après traversée de trous traversants qu'elles (PA) comprennent.

Chaque patte de support PS peut, par exemple, être réalisée en métal (par exemple en aluminium ou en acier), ou en matière plastique rigide.

On notera, comme illustré non limitativement sur les figures 1 et 2, que la machine électrique motrice ME peut être également couplée, via une pièce en élastomère PE, au troisième élément structurel ES3 du véhicule. Cette pièce en élastomère PE est chargée d'amortir suivant la direction longitudinale X les vibrations induites par la production de couple. Par ailleurs, cette pièce en élastomère PE est solidarisée à la machine électrique motrice ME via une patte de fixation PF' de cette dernière (ME). L'élastomère peut être naturel et/ou de synthèse.

Comme illustré non limitativement sur les figures 1 et 2, la traverse TS peut être solidarisée (ou couplée) aux premier ES1 et deuxième ES2 éléments structurels indirectement, via respectivement deux pièces de couplage PC1 et PC2. La solidarisation de ces pièces de couplage PC1 et PC2 à la traverse TS se fait au moyen de moyens de fixation MF (comme par exemple des vis ou boulons) qui coopèrent avec des premiers trous T1 définis dans les deux inserts principaux IPj. Ici, chaque pièce de couplage PCj est plus précisément solidarisée à la face supérieure de la traverse TS au niveau d'une paire de premiers trous T1 définis dans l'un des inserts principaux IPj.

Ces pièces de couplage PC1 et PC2 peuvent, par exemple, être réalisées en métal (par exemple en aluminium ou en acier), ou en matière plastique rigide.

On notera que dans une variante de réalisation non illustrée, la traverse TS pourrait être solidarisée directement aux premier ES1 et deuxième ES2 éléments structurels.

On notera également que les pièces de couplage PC1 et PC2 peuvent être différentes entre elles, voire très différentes, ou bien identiques.

On notera également, bien que cela n'apparaisse pas sur les figures, que l'une des pièces de couplage PCj (par exemple PC1) peut être éventuellement agencée pour assurer un déport vers le haut suivant la direction verticale Z, et/ou l'autre pièce de couplage PCj' (par exemple PC2) peut être éventuellement agencée pour assurer un déport vers le bas suivant la direction verticale Z.

Par ailleurs, comme illustré non limitativement sur les figures 1 et 2, la traverse TS peut être installée dans le véhicule parallèlement à la direction transversale Y. Mais cela n'est pas obligatoire. En effet, la traverse TS pourrait être installée dans le véhicule suivant une direction générale qui est légèrement désorientée par rapport à la direction transversale Y (dans le plan XY). Dans ce cas, l'angle de désorientation peut, par exemple, être compris entre environ 3° et environ 20°.

Bien que cela n'apparaisse pas sur les figures, la traverse TS peut éventuellement comprendre sur l'un au moins des bords transversaux BT1 et BT2 de sa partie principale PP au moins un bossage suivant la direction longitudinale X. Ce type de bossage est destiné à permettre la fixation d'élément(s) sous le capot du véhicule, comme par exemple un flexible, une canalisation, une pompe, un composant électronique, un compresseur, avec un positionnement suivant la direction longitudinale X potentiellement plus favorable sur le plan de l'implantation et/ou du montage. L'axe des bossages peut être également suivant la direction verticale Z afin de faciliter le positionnement des composants sur la traverse TS.

Par ailleurs, et bien que cela n'apparaisse par sur les figures, la partie principale PP peut comprendre en au moins un endroit situé entre ses deux extrémités Ej un insert auxiliaire de renfort destiné à renforcer localement la partie principale PP là où l'on a besoin d'augmenter la raideur.

On notera que l'un au moins des inserts auxiliaires peut éventuellement comprendre des trous auxiliaires permettant un couplage d'une partie au moins d'un équipement EP du véhicule (autre que la machine électrique motrice ME et visible sur la figure 2). Dans ce cas, l'insert auxiliaire renforce localement la partie principale PP là où l'on a besoin d'augmenter la raideur pour permettre le couplage d'un équipement EP, comme par exemple une partie au moins de l'électronique de puissance, ou un accessoire (voir figure 2). On notera également que certains au moins des éventuels trous auxiliaires peuvent être éventuellement taraudés afin de permettre un vissage sans écrou rapporté d'une partie filetée d'une vis MF destiné(e) à coupler un équipement, éventuellement via un support.

Par exemple, chaque insert auxiliaire peut être réalisé dans un matériau composite à fibres continues. Dans ce cas, chaque insert auxiliaire peut être réalisé par surmoulage sur la partie principale PP. Ce surmoulage peut être réalisé dans le moule utilisé pour réaliser la partie principale PP, après que la matière plastique de cette dernière (PP) ait été injectée dans ce moule, ou bien sur l'insert auxiliaire préalablement intégré dans le moule avant le surmoulage du plastique. Cela permet, par exemple, d'augmenter la raideur en flexion de la traverse TS en venant mettre sur les deux toiles supérieures de cette dernière (TS) une fine couche de matière composite en fibres continues.

Dans l'exemple illustré non limitativement sur la figure 2, une partie au moins de l'électronique de puissance EP du véhicule est solidarisée à la face supérieure de la partie principale PP de la traverse TS au moyen de moyens de fixation (comme par exemple des vis ou boulons) qui coopèrent avec des trous auxiliaires définis dans des inserts auxiliaires (non visibles).

En variante, au lieu d'adjoindre à la partie principale PP des inserts auxiliaires de renfort, on peut plus simplement lui adjoindre des écrous, par exemple lorsqu'on la réalise dans son moule. Ces écrous sont ainsi immobilisés fixement et de façon très solide par rapport à la partie principale PP. On notera que ces écrous peuvent être également assemblés à la traverse TS à l'aide de moyens de clippage dans une contreforme prévue à cet effet.

Le GMP selon l'invention offre plusieurs avantages par rapport à un GMP comprenant une traverse en tôle ou en aluminium moulé ou encore en aluminium extrudé à parties pleines, parmi lesquels :
- une réduction de la masse,
- une réduction du nombre de pièces à gérer et à assembler,
- une grande liberté de géométrie et de forme de sa traverse, qui permet d'utiliser juste ce qu'il faut de matière, là où il faut, pour assurer le compromis tenue / masse,
- une adaptabilité de forme de sa traverse en fonction de l'environnement et des besoins d'implantation d'équipements. Notamment, on peut envisager de réaliser une traverse non plane, par exemple avec des extrémités situées à des altitudes différentes (pour optimiser les éléments structurels supportant la traverse),
- la possibilité d'intégrer des fonctions dans sa traverse, par exemple en supprimant des supports intermédiaires entre sa traverse et des composants à coupler, ce qui induit des réductions de temps de montage et de coût.

## Revendications

1. Groupe motopropulseur de véhicule, ledit groupe motopropulseur comprenant une machine électrique motrice (ME) suspendue à une traverse (TS), ladite traverse (TS) comprend i) une partie principale (PP) réalisée dans une matière plastique rigide et comprenant deux extrémités (Ej) opposées, **caractérisé en ce que** ladite traverse comprend en outre: ii) deux inserts principaux (IPj) réalisés dans une matière métallique, intégrés respectivement dans lesdites extrémités (Ej) et comprenant chacun des premiers trous (T1) participant au couplage de ladite traverse (TS) à des éléments structurels (ES1, ES2) dudit véhicule et un évidement central (EC) dans lequel est installée fixement une pièce de filtrage (PF) à laquelle est couplée une partie de ladite machine électrique motrice (ME) et filtrant des vibrations induites par cette dernière (ME).

2. Groupe motopropulseur selon la revendication 1, **caractérisé en ce que** chaque pièce de filtrage (PF) comprend une partie amortissante (PM) surmoulée dans ledit évidement central (EC) et comportant un logement central dans lequel est installée fixement une pièce d'ancrage (PA) à laquelle est couplée ladite partie de la machine électrique motrice (ME).

3. Groupe motopropulseur selon la revendication 2, **caractérisé en ce que** chaque partie amortissante (PM) est réalisée en élastomère, et chaque pièce d'ancrage (PA) est réalisée en métal.

4. Groupe motopropulseur selon la revendication 2 ou 3, **caractérisé en ce que** chaque partie amortissante (PM) est surmoulée sur ladite pièce d'ancrage (PA) associée.

5. Groupe motopropulseur selon l'une des revendications 1 à 4, **caractérisé en ce que** lesdites extrémités (Ej) de la partie principale (PP) sont surmoulées sur lesdits inserts principaux (IPj) en présentant des ouvertures en regard desdits premiers trous (T1).

6. Groupe motopropulseur selon l'une des revendications 1 à 5, **caractérisé en ce que** ladite matière métallique des inserts principaux (IPj) est choisie parmi un aluminium extrudé, un aluminium de fonderie, et un acier.

7. Groupe motopropulseur selon l'une des revendications 1 à 6, **caractérisé en ce que** ladite matière plastique de la partie principale (PP) est une matière thermoplastique chargée en fibres de verre.

8. Groupe motopropulseur selon l'une des revendications 1 à 7, **caractérisé en ce que** ladite partie principale (PP) comprend en au moins un endroit situé entre ses deux extrémités (Ej) un insert auxiliaire de renfort.

9. Véhicule, **caractérisé en ce qu'**il comprend un groupe motopropulseur selon l'une des revendications précédentes.

10. Véhicule selon la revendication 9, **caractérisé en ce que** ladite traverse (TS) du groupe motopropulseur est installée suivant une direction présentant une désorientation par rapport à une direction transversale dudit véhicule, elle-même perpendiculaire à des côtés latéraux dudit véhicule.

## Patentansprüche

1. Fahrzeugantriebsstrang, wobei der Antriebsstrang mit einem elektrischen Antriebsmaschine (ME) aufgehängt von einem Strahl (TS), das Querglied (TS) umfasst : i) ein Hauptteil (PP) aus einem starren Kunststoffmaterial und mit zwei Enden (Ej) entgegengesetzt, **dadurch gekennzeichnet , dass** das Querglied ferner umfasst: ii) zwei Einsätze Haupt (IPj) realisiert s in e metallisches Material, integriert die jeweils in den Enden (Ej) aufweist und jede der erste Löcher (T1) in teilnehmenden Synchr e des Querträgers (TS) zu den Strukturelementen (ES 1, ES2) des Fahrzeugs und einer zentralen Ausnehmung (EG) in der fest einen Filterteil (FP), die installiert ist, gekoppelt mit einem Teil der elektrischen Antriebsmaschine (EM) und Filtern von durch diese induzierten Schwingungen (ME).

2. Antriebsstrang nach Anspruch 1, **dadurch gekennzeichnet, dass** jedes Filterteil (FP) einen stoßdämpfenden Teil (PM) aufweist, der in der zentralen Aussparung (EC) geformt ist und eine zentrale Aussparung aufweist, in der ein fest verankertes Teil (PA), an das gekoppelt ist, wobei ein Teil des Elektromotors Maschine (ME).

3. Antriebsstrang nach Anspruch 2, **dadurch gekennzeichnet, daß** jedes Dämpfungsteil (PM) wird hergestellt aus einem Elastomer, und jedes Verankerungsteil (PA) gemacht wird von Metall.

4. Antriebsstrang nach Anspruch 2 oder 3, **dadurch gekennzeichnet, dass** jedes Dämpfungsteil (PM) auf dem zugehörigen Verankerungsteil (PA) umspritzt ist.

5. Antriebsstrang nach einem der Ansprüche 1 bis 4, der **dadurch gekennzeichnet ist, dass** die Enden (Ej) des Hauptteils (PP) auf die Haupteinsätze (IPj) mit Öffnungen geformt sind, die den ersten Löchern (T 1) zugewandt sind.

6. Antriebsstrang nach einem der Ansprüche 1 bis 5, der **dadurch gekennzeichnet ist, dass** der Metallmaterial-Einsatzschlüssel (IPJ) aus einem extrudierten Aluminium, einem Aluminiumguss und einem Stahl ausgewählt ist.

7. Antriebsstrang nach einem der Ansprüche 1 bis 6, **dadurch gekennzeichnet, dass** das Kunststoffmaterial des Hauptteils (PP) ein mit Material gefülltes thermoplastisches E- Glasfaserglas ist.

8. Antriebsstrang nach einem der Ansprüche 1 bis 7, **dadurch gekennzeichnet** in DASS der Hauptteil (PP) umfasst, an mindestens einer Stelle der sich zwischen seinen beiden Enden (Ej) ein Hilfsverstärkungseinlage.

9. Fahrzeug, **dadurch gekennzeichnet, dass** es umfasst einen Antriebsstrang nach einem der vorhergehenden Ansprüche.

10. Fahrzeug nach Anspruch 9, **dadurch gekennzeichnet, dass** der Querträger (TS) des Antriebsstrangs in einer Richtung eingebaut ist, die eine Desorientierung in Bezug auf eine Querrichtung Fahrzeugs aufweist, selbst senkrecht zu den seitlichen Seiten Fahrzeugs.

## Claims

1. Vehicle powertrain, said power train comprising an electric motive machine (ME) suspended from a beam (TS), said cross member (TS) comprises i) a main part (PP) made of a rigid plastic material and comprising two ends (Ej) opposed, **characterized in that** said cross member further comprises : ii) two inserts main (IPj) realized s in e metallic material, integrated respectively in said ends (Ej) and comprising each of first holes (T1) participating in synchr e of said cross-member (TS) to the structural elements (ES 1, ES2) of said vehicle and a central recess (EC) in which is fixedly installed a filter part (FP) which is coupled to a portion of said drive electric machine (EM) and filtering of es vibrations induced by the latter (ME).

2. Powertrain according to Claim 1, **characterized in that** each filter part (FP) includes a shock-absorbing portion (PM) molded in said central recess (EC) and having a central recess in which is installed an fixedly an anchoring part (PA) to which is coupled said part of the electric motor machine (ME).

3. Powertrain according to Claim, **characterized in that** each damping part (PM) is made of elastomer, and each anchoring part (PA) is made of metal.

4. Powertrain according to claim 2 or 3, **characterized in that** each damping part (PM) is overmolded on said associated anchoring part (PA).

5. Powertrain according to one of claims 1 to 4, **characterized in that** said ends (Ej) of the main part (PP) are molded onto said main inserts (IPj) with openings facing said first holes (T 1).

6. Powertrain according to one of claims 1 to 5, **characterized in that** said metallic material inserts key (IPJ) is selected from an extruded aluminum, an aluminum casting, and a steel.

7. Powertrain according to one of claims 1 to 6, **characterized in that** said plastic material of the main part (PP) is a material -filled thermoplastic fiberglass.

8. Powertrain according to one of claims 1 to 7, **characterized in that** said main part (PP) comprises at least one place located between its two ends (Ej) an auxiliary reinforcing insert.

9. Vehicle, **characterized in that** it comprises a power train according to one of the preceding claims.

10. Vehicle according to Claim 9, **characterized in that** said cross member (TS) of the power train is installed in a direction having a disorientation with respect to a transverse direction of said vehicle, itself perpendicular to lateral sides of said vehicle.
